Europäisches Patentamt

European Patent Office

Office européen des brevets

(11) Veröffentlichungsnummer: **0 151 659**
**A1**

(12) **EUROPÄISCHE PATENTANMELDUNG**

(21) Anmeldenummer: **84101387.3**

(22) Anmeldetag: **10.02.84**

(51) Int. Cl.⁴: **B 23 B 31/10**
**B 23 B 31/16, B 23 B 33/00**

(43) Veröffentlichungstag der Anmeldung:
**21.08.85 Patentblatt 85/34**

(84) Benannte Vertragsstaaten:
**AT BE CH DE FR GB IT LI NL SE**

(71) Anmelder: **VMEI "LENIN"**
**Quartal Darveniza**
**Sofia(BG)**

(72) Erfinder: **Patarinski, Dako Penkov, Dipl.-Ing.**
**Block 128-3 App. 64 Yunak Strasse**
**Sofia(BG)**

(74) Vertreter: **Finck, Dieter et al,**
**Patentanwälte v. Füner, Ebbinghaus, Finck Mariahilfplatz**
**2 & 3**
**D-8000 München 90(DE)**

(54) **Treibendes Backenfutter.**

(57) Das treibende Backenfutter dient zur übertragung eines
Drehmoments bei Bearbeitungsvorgängen, bei denen ein
Werkstück zwischen den Spitzen einer Bearbeitungsmaschine aufgenommen ist. Es ermöglicht ein manuelles, mechanisches oder automatisches Einspannen, ohne daß dabei das
Werkstück mit zusätzlichen Radialkräften beaufschlagt wird.
Das treibende Backenfutter ist sowohl bei festen als auch bei
rotierenden Vorderspitzen einsetzbar und kann in automatischen Maschinen und Fertigungsstraßen eingebaut werden,
ohne daß dabei wesentliche Konstruktionsänderungen erforderlich sind. Es besteht aus einer an der Spindel der
Werkzeugmaschine befestigten Spitze (8) und aus einem
Gehäuse (1) mit Führungen, in denen ein Gleitstück (2)
montiert ist. Dieses Gleitstück (2) ist mit einem Träger (3)
verbunden, der seinerseits ein gelenkig angebautes Prismenstück (10) und ein Führungsstück (4) mit einer daran
befestigten Backe (5) trägt. Das Gleitstück (2) und das
Führungsstück (4) sind mit einem Antriebsmechanismus (30)
verbunden.

fig.2

v. FÜNER     EBBINGHAUS     0151659 K
PATENTANWÄLTE     EUROPEAN PATENT ATTORNEYS
MARIAHILFPLATZ 2 & 3, MÜNCHEN 90
POSTADRESSE: POSTFACH 95 01 60, D-8000 MÜNCHEN 95

V M E I "LENIN"                    EPAC-31681.4

                                   10. Februar 1984


Treibendes Backenfutter


Die Erfindung betrifft ein treibendes Backenfutter nach
dem Oberbegriff des Patentanspruchs 1.


Solche Backenfutter werden bei Werkzeugmaschinen und insbesondere für die Übertragung eines Drehmoments beim
Drehen, Schleifen, Zahn- und Schlitzfräsen und anderen
Bearbeitungsvorgängen eingesetzt, bei denen das zu bearbeitende Werkstück zwischen den Spitzen einer Bearbeitungsmaschine aufgenommen wird.


Es ist bereits ein treibendes Backenfutter bekannt
(Industriezweig-Normenblatt MH 4051-62, UdSSR), das
ein an einer Spindel einer Drehbank befestigtes Gehäuse aufweist, in dem auf Führungen ein Gleitstück sitzt,
dessen Verschiebung durch eine Feder begrenzt wird. An
den diametral  gegenüberliegenden Enden des Gleitstücks
sind durch Achsen rotierende Backen mit exzentrischen
Massen befestigt.


Das bekannte treibende Backenfutter kann nur bei hohen
Werkstückdrehzahlen eingesetzt werden und hat einen beschränkten Spannbereich pro Backensatz. Ein Auswechseln
der Backen ist sehr zeitaufwendig, so daß der Einsatz
des Backenfutters in der Kleinserien- und Einzelfertigung
nicht gerechtfertigt ist. Außerdem ergibt sich infolge der
Radialkraft eine zusätzliche Belastung des Werkstücks, was zu Fehlern an der bearbeiteten Fläche führt.

Bekannt ist außerdem ein treibendes Backenfutter
(SU-PS 319 402) mit einem Gehäuse, in dem zwei mit
Backen an dem einen Ende und mit einer Spannhülse am anderen
Ende in Berührung stehende Hebel angeordnet sind. Um eine
genaue Werkstückaufnahme zu gewährleisten, sind die Hebelachsen radial fliegend ausgeführt und weisen einen
Arretiermechanismus auf.

Ein Nachteil dieses Backenfutters ist, daß es bei Schleifmaschinen nicht einzusetzen ist, daß es zwei Spannmechanismen erfordert und daß es nicht für die Kleinserien- und Einzelfertigung ausgelegt ist.

Die der Erfindung zugrunde liegende Aufgabe besteht
darin, das treibende Backenfutter der eingangs genannten Art so auszubilden, daß ein manuelles, mechanisiertes
oder automatisches Einspannen des Werkstücks nach seiner
Aufnahme zwischen den Spitzen der Werkzeugmaschine
möglich ist, und daß es für sämtliche Bearbeitungsarten
im Maschinenbau einsetzbar ist, ohne dabei das Werkstück
durch zusätzliche Kräfte zu beaufschlagen.

Diese Aufgabe wird durch ein treibendes Backenfutter gelöst, das in
bekannter Weise an einer Werkzeugmaschinenspindel befestigt ist und aus Gehäuse und Spitze besteht. Am Gehäuse sind Führungen ausgeführt, in denen ein Gleitstück
eingebaut ist, dessen Verschiebung durch eine Feder begrenzt wird. Am Gleitstück ist ein Träger angebaut, an
dessen einem Ende eine durch eine Achse mit einem Prismenstück gelenkverbundene Platte befestigt ist, wobei die
Drehbewegung des Prismenstücks durch einen Stift begrenzt
wird, der in einen Kanal im Prismenstück eingreift. Am
diametral gegenüberliegenden Ende des Trägers sitzt in
zu den Gehäuseführungen parallel liegenden Führungsbahnen
ein Führungsstück, an dem eine Backe angebracht ist.
Zwischen Gleitstück und Führungsstück ist ein Antriebsmechanismus vorgesehen. Die Backe und die Platte sind bezüglich des Trägers einstellbar.

Das erfindungsgemäße treibende Backenfutter hat den Vorteil, daß ein manuelles, mechanisiertes oder automatisches Einspannen zur Übertragung des Drehmoments mit einfachen Mitteln möglich ist, ohne daß dabei das Werkstück durch zusätzliche Radialkräfte beaufschlagt wird, wobei sowohl feste als auch mit der Maschinenspindel rotierende Spitzen zum Einsatz kommen können. Das Backenfutter kann in automatische Maschinen und Fertigungsstraßen eingebaut werden und läßt sich schnell für die Bearbeitung von Werkstücken mit einem anderen Durchmesser umstellen. Das Einspannen erfolgt, nachdem das Werkstück zwischen den Spitzen der Maschine aufgenommen ist, wobei die Spannkraft einstellbar ist. Der Einsatz des erfindungsgemäßen treibenden Backenfutters bedingt keine wesentliche konstruktive Veränderung an bestehenden Maschinen.

Anhand von Zeichnungen wird ein Ausführungsbeispiel der Erfindung näher erläutert. Es zeigt:

Fig. 1      eine Stirnansicht des treibenden Backenfutters,

Fig. 2      den Schnitt A-A von Fig. 1,

Fig. 3      den Schnitt B-B von Fig. 1,

Fig. 4      den Schnitt C-C von Fig. 1 und

Fig. 5      eine Ausführungsvariante des Gleitstücks für manuelles Einspannen.

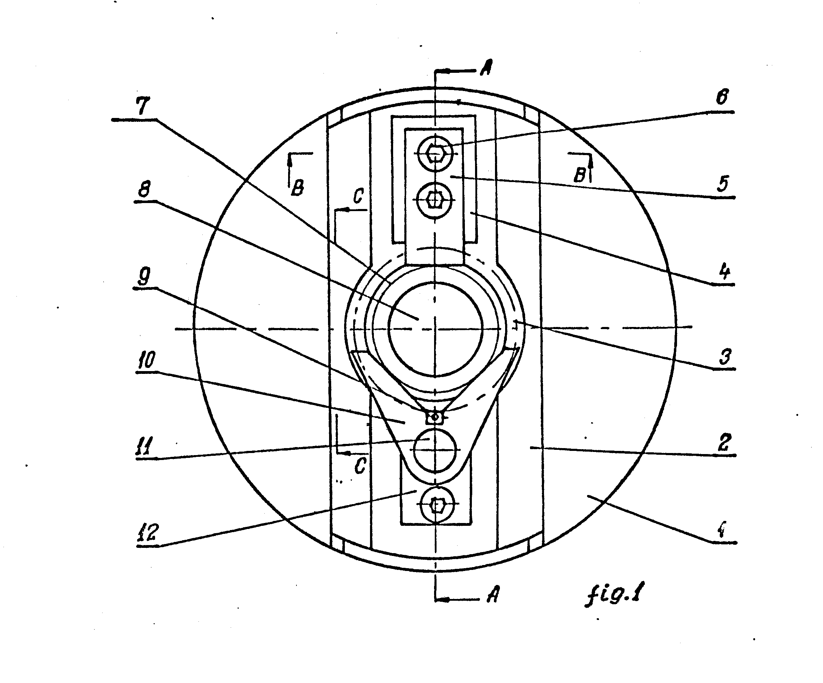

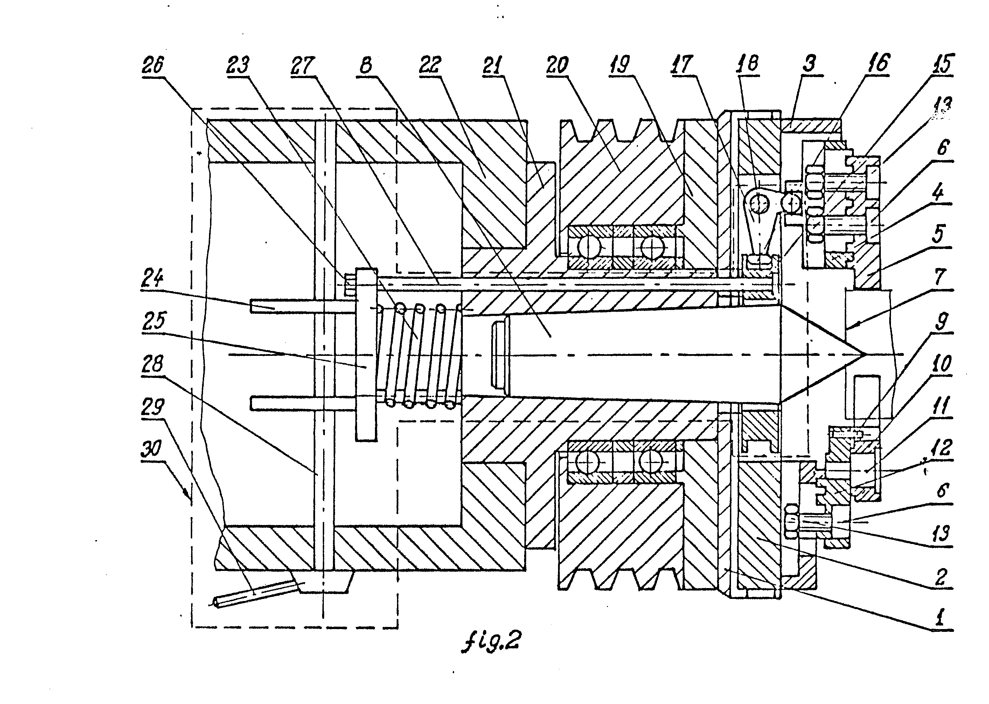

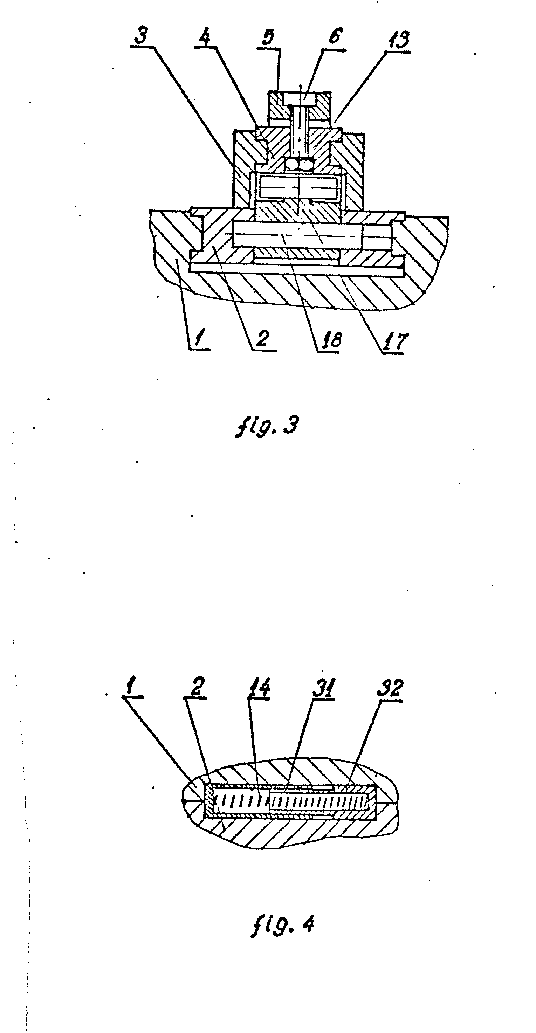

Das in Fig. 1 bis 4 gezeigte treibende Backenfutter besteht aus einem Gehäuse 1, das an der Abdeckung 19 einer Keilriemenscheibe 20 einer Werkzeugmaschine befestigt ist, die eine Hülse 21 für die Aufnahme einer Spitze 8 zur Fixierung eines Werkstücks 7 aufweist. In Führungen des Gehäuses 1 ist ein Gleitstück 2 montiert. In Aussparungen im Gehäuse 1 und im Gleitstück 2 ist durch einen Federtopf 32 und einen Deckel 31 eine Feder 14 gehalten. Am Gleitstück 2 ist ein Träger 3 befestigt, an dessen einem Ende durch eine Schraube 6 und eine Mutter 13 eine Platte 12 angebracht ist. An der Platte 12 ist über eine Achse 11 ein Prismenstück 10 angelenkt, das eine Aussparung aufweist, in die ein an der Platte 12 befestigter Stift 9 ragt. Am diametral gegenüberliegenden Ende des Trägers 3 sind zu den Führungen am Gehäuse 1 parallele Führungsbahnen ausgebildet, in denen ein Führungsstück 4 liegt. Am Führungsstück 4 ist durch Schrauben 6 und Muttern 13 eine Backe 5 befestigt. Zwischen dem Führungsstück 4 und dem Gleitstück 2 ist ein Antriebsmechanismus 30 montiert. Die Backe 5 kann zum Führungsstück 4, die Platte 12 zum Träger 3 einstellbar verschoben werden.

Wenn die Werkzeugmaschine eine Drehbank ist, sind das Gehäuse 1 des treibenden Backenfutters und die Spitze 8 an der Maschinenspindel befestigt.

Bei Maschinen mit fester Spitze 8 hat der in der Hülse 21 des Spindelstocks 22 der Maschine liegende Antriebsmechanismus 30 einen Hebel 17, der durch eine feste Achse 18 im Gleitstück 2 des treibenden Backenfutters gelagert ist. Die eine Seite des Hebels 17 steht mit einer Aussparung im Führungsstück 4 in Berührung. An seiner anderen Seite sitzt eine in einer Aussparung in einem Ring 15 angeordnete Rolle 16. Der Ring 15 ist unbeweglich an drei Stiftschrauben 27 befestigt, welche durch entsprechende Bohrungen in der Hülse 21 hindurchgehen und durch Bolzen 26 mit einer Scheibe 25 verbunden sind, die mit einer Spanneinrichtung verbunden ist. Bei der gezeigten Ausführungsform ist zwischen der Scheibe 25 und der Hülse 21 eine Spannfeder 23 angeordnet. Auf ihrer gegenüberliegenden Stirnseite liegt die Scheibe 25 an einem Exzenter 24 an, der an einer im Spindelstock 22 gelagerten und am Ende einen Handgriff 29 aufweisenden Welle 28 befestigt ist.

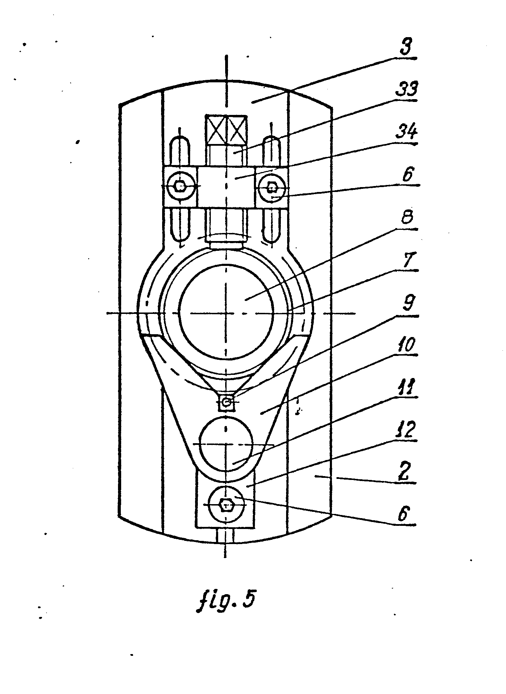

Bei manueller Betätigung des Backenfutters hat der Antriebsmechanismus 30, wie in Fig. 5 gezeigt ist, einen Bolzen 33, der in einer unteren Backe 34 sitzt, die durch eine Schraube 6 und eine Mutter 13 am Träger 3 befestigt ist.

Das Werkstück 7 wird zwischen den Spitzen einer Werkzeugmaschine so fixiert, daß zwischen den Wänden des Prismenstücks 10, der Backe 5 und dem Werkstück 7 ein Spiel vorhanden ist, das sich durch die Verstellung der Backe 5 am Führungsstück 4 und der Platte 12 und damit des Prismenstücks 10 am Träger 3 ergibt, wobei diese Verstellung mit Hilfe der Schrauben 6 und der Muttern 13 durchgeführt wird. Beim Auslösen eines entsprechenden Signals wird durch den Antriebsmechanismus 20 eine zwischen dem Gleitstück 2 und dem Führungsstück 4 wirkende Kraft erzeugt, die ihre Relativverschiebung in Gang setzt. Beim Kontakt der Backe 5 mit der Oberfläche des Werkstücks 7 wird eine Kraft erzeugt, die das Gleitstück 2 und damit auch das Prismenstück 10 in Richtung der Oberfläche des Werkstücks 7 verschiebt. Dabei berührt die eine Wand des Prismenstücks 10 die Oberfläche des Werkstücks 7, wodurch ein Moment erzeugt wird, unter dessen Einwirkung das Prismenstück 10 sich um die Achse 11 dreht. Diese Bewegungen dauern fort bis auch die zweite Wand des Prismenstücks 10 mit der Oberfläche des Werkstücks 7 in Kontakt kommt. Dabei werden Kräfte erzeugt, deren Normalkomponenten sich gegenseitig ausgleichen, während die Reibungskräfte auf das Werkstück 7 ein Drehmoment übertragen. Wenn sich aufgrund der durch den Antriebsmechanismus erzeugten Kraft das Gleitstück 2 in Bewegung setzt, wird die Oberfläche des Werkstücks 7 zuerst von der einen Wand des Prismenstücks 10 berührt, wonach sich das Prismenstück 10 dreht, bis auch seine zweite Wand die Oberfläche des Werkstücks 7 berührt. Dann beginnt die Bewegung des Führungsstücks 4, bis die Backe 5 das Werkstück 7 berührt, wobei die oben beschriebenen Kräfte erzeugt werden. Beim Auslösen des entsprechenden, dem Antriebsmechanismus 30 zugeführten Signals werden durch ihn das Führungsstück 4 und durch die Feder 14 das Gleitstück 2 in die Ausgangsstellung versetzt.

Für die Erzeugung der Kraft durch den Antriebsmechanismus 30 wirkt auf die Scheibe 25 eine Kraft von einer elektromechanischen, hydraulischen oder pneumatischen Spannvorrichtung oder von der Spannfeder 25 ein. Dabei werden die Scheibe 25 und mit ihr auch die Stiftschrauben 27 und der Ring 15 in Längsrichtung der Spitze 8 versetzt. Dies hat eine Drehbewegung des Hebels 17 um die feste Achse 18 zur Folge, womit die erforderlichen auf das Gleitstück 2 und das Führungsstück 4 einwirkenden Kräfte erzeugt werden. Beim Verschieben der Scheibe 25 in entgegengesetzter Richtung durch die Spannvorrichtung oder beim Drehen des Exzenters 24 durch den Handgriff 29 führt der Hebel 17 eine Drehbewegung in entgegengesetzter Richtung aus, womit das Führungsstück 4 wieder in die Ausgangsstellung versetzt wird.

Bei dem treibenden Backenfutter mit manueller Einspannung berührt beim Einschrauben der Bolzen 33 (Fig. 5) die Oberfläche des Werkstücks 7, wodurch die Verschiebung des Gleitstücks 2 beginnt. Alle weiteren Vorgänge verlaufen wie beschrieben.

Patentansprüche:

1. Treibendes Backenfutter mit einer an einer Spindel einer Werkzeugmaschine befestigten Spitze und mit einem Gehäuse, das Führungen aufweist, in denen ein Gleitstück montiert ist, dessen Verschiebung durch eine Feder begrenzt ist, dadurch g e k e n n - z e i c h n e t, daß am Gleitstück (2) ein Träger (3) angebaut ist, an dessen einem Ende eine Platte (12) sitzt, an der über eine Achse (11) ein Prismenstück (10) angelenkt ist, dessen Drehung durch einen Stift (9) begrenzt wird, und daß am diametral gegenüberliegenden Ende des Trägers (3) zu den Führungen am Gehäuse (1) parallel verlaufende Führungsbahnen ausgebildet sind, in denen ein Führungsstück (4) beweglich montiert ist, an dem eine Backe (5) befestigt ist.

2. Treibendes Backenfutter nach Anspruch 1, dadurch g e - k e n n z e i c h n e t, daß das Gleitstück (2) und das Führungsstück (4) mit einem Antriebsmechanismus (30) verbunden sind.

fig.1

EPAC-31681.4
0151659

fig.2

EPAC-31681

0151659

=14

fig. 3

fig. 4

fig.5

### Europäisches Patentamt

# EUROPÄISCHER RECHERCHENBERICHT

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl. ³) |
|---|---|---|---|
| Y | FR-A-1 028 299  (LE PROGRES INDUSTRIEL)<br>* Seite 2, rechte Spalte; Figur 2 * | 1,2 | B 23 B  31/10<br>B 23 B  31/16<br>B 23 B  33/00 |
| | --- | | |
| Y | DE-C-  692 669<br>(DORTMUND-HOERDER HÜTTENVEREIN AKT.-GES.)<br>* Seite 3; Figur 1 * | 1,2 | |
| | --- | | |
| A | FR-A-1 378 470  (KOVOSVIT) | | |
| | --- | | |
| A | US-A-2 462 284  (RAUCH) | | |
| | --- | | RECHERCHIERTE SACHGEBIETE (Int. Cl. ³) |
| A | US-A-2 867 443  (SWANSON) | | |
| | --- | | |
| A | US-A-2 852 265  (VAN DINEN) | | B 23 B  31/00<br>B 23 B  33/00 |
| | ----- | | |

Der vorliegende Recherchenbericht wurde für alle Patentansprüche erstellt.

| Recherchenort<br>DEN HAAG | Abschlußdatum der Recherche<br>01-10-1984 | Prüfer<br>BOGAERT F.L. |
|---|---|---|